# EUROPÄISCHE PATENTSCHRIFT

(11) **EP 0 958 124 B1**
(45) Veröffentlichungstag und Bekanntmachung des Hinweises auf die Patenterteilung: **22.08.2001**
(21) Anmeldenummer: 97916322.7
(22) Anmeldetag: 01.03.1997
(51) Int. Cl.: B29C 49/64

(54) **VERFAHREN ZUR TEMPERIERUNG VON VORFORMLINGEN SOWIE VORRICHTUNG ZUR TEMPERIERUNG**
PROCESS FOR TEMPERATURE-CONTROL OF PREFORMS AND TEMPERATURE-CONTROL DEVICE
PROCEDE DE THERMOREGULATION D'UNE EBAUCHE ET DISPOSITIF DE THERMOREGULATION

(30) Priorität: 06.03.1996 DE 19608570
(43) Veröffentlichungstag der Anmeldung: 24.11.1999
(73) Patentinhaber: KRUPP CORPOPLAST MASCHINENBAU GmbH, 22145 Hamburg (DE)
(72) Erfinder: APPEL, Otto, D-22926 Ahrensburg (DE); BALKAU, Karl-Heinz, D-22113 Oststeinbek (DE); JAKSZTAT, Wolf, D-22547 Hamburg (DE)
(74) Vertreter: Klickow, Hans-Henning
(86) Internationale Anmeldenummer: DE9700399
(87) Internationale Veröffentlichungsnummer: WO9732713

(56) Entgegenhaltungen:
- EP-A- 0 620 099
- DE-A- 2 211 307
- FR-A- 2 140 170
- US-A- 5 292 243

## Beschreibung

Die Erfindung betrifft ein Verfahren zur Temperierung von Vorformlingen aus einem thermoplastischen Material, wobei die Vorformlinge zur Blasverformung in Behälter vorgesehen sind, bei dem der Vorformling entlang eines Umfanges mit einem Temperaturprofil versehen wird, das dadurch erzeugt wird, daß sich in Richtung einer Längsachse des Vorformlings erstreckende streifenförmige Bereiche unterschiedlich beheizt werden und bei dem eine schrittweise Temperierung zur zeitlich aufeinanderfolgenden thermischen Konditionierung unterschiedlicher Bereiche des Vorformlings durchgeführt wird.

Die Erfindung betrifft darüber hinaus eine Vorrichtung zur Temperierung von Vorformlingen aus einem thermoplastischen Material, die mindestens eine Förderstrecke für die Vorformlinge und mindestens eine Heizeinrichtung aufweist und die Vorformlinge mit einem Temperaturprofil in Umfangsrichtung der Vorformlinge versieht.

Ein derartiges Verfahren wird beispielsweise angewendet, wenn Behälter hergestellt werden sollen, deren Querschnitt von einer kreisrunden Form abweicht. Die Abweichung kann beispielsweise darin bestehen, Behälter mit ovalem Querschnitt oder beispielsweise mit dreieckigem oder viereckigem Querschnitt zu produzieren.

Die Herstellung derartiger unrunder Behälter wird bereits in der US 3,775,524 beschrieben. Es erfolgt zunächst eine symmetrische Temperierung der Vorformlinge, anschließend wird die Temperatur in ausgewählten Bereichen selektiv erhöht. Weitere Varianten zur Herstellung von Temperaturprofilierungen in Umfangsrichtung des Vorformlings werden ebenfalls in der US 3,632,713, der US 3,950,459 sowie der US 3,892,830 beschrieben. Eine Temperaturkonditionierung durch selektive Abschattung wird in der DE-OS 33 14 106 angegeben.

Aus der US 5,292,243 ist es bekannt, gleichzeitig zwei Vorformlinge einer Temperaturkonditionierung in Umfangsrichtung zu unterziehen. In der EP-OS 0 620 099 findet sich eine Zusammenstellung von aus dem Stand der Technik bekannten Verfahren zur Temperaturkonditionierung von Vorformlingen.

Ein gattungsbildendes Verfahren sowie eine gattungsbildende Vorrichtung sind bereits aus der EP-A-0 620 099 (SIDEL SA) bekannt. Die schrittweise Temperierung erfolgt hier jedoch zeitlich in aufeinanderfolgenden Temperierungsphasen.

Aus der DE 22 11 307 A (LEIFELD & CO) ist ein Verfahren zur Herstellung von Gegenständen aus Kunststoff bekannt, bei dem der Gegenstand durch Blasverformung aus einem extrudierten Kunststoffschlauch hergestellt wird und bei dem der Kunststoffschlauch selektiv derart gekühlt wird, daß horizontal und/oder vertikal verlaufende Temperaturzonen bereitgestellt sind.

In der FR 21 40 170 (PHILLIPS PETROLEUM CO) wird die Herstellung eines Behälters mit einer von einer runden Kontur abweichenden Querschnittfläche erläutert. Der Behälter ist dabei aus einem extrudierten Kunststoffschlauch hergestellt.

Den vorbekannten Verfahren ist es gemeinsam, daß entweder ein relativ hoher apparativer Aufwand vorliegt, oder daß nur eine relativ schlechte Reproduzierbarkeit gewährleistet werden kann.

Aufgabe der vorliegenden Erfindung ist es daher, ein Verfahren der einleitend genannten Art derart anzugeben, daß bei geringem Aufwand eine qualitativ hochwertige Temperaturkonditionierung erreicht werden kann.

Diese Aufgabe wird erfindungsgemäß dadurch gelöst, daß eine schrittweise Rotation mit Bewegungs- und Ruhephasen durchgeführt wird.

Weitere Aufgabe der vorliegenden Erfindung ist es, eine Vorrichtung der einleitend genannten Art derart zu konstruieren, daß eine selektive Temperierung des Vorformlinges mit hoher Reproduzierbarkeit ermöglicht wird. Diese Aufgabe wird erfindungsgemäß mit einem Verfahren gemäß Patentanspruch 1 und ferner mit einer vorrichtung gemäß Patentanspruch 14 gelöst.

Zweck mäßige Weiter bildungen der Erfindung sind Gegenstand der jeweiligen abhängigen Ansprüche.

Die schrittweise Temperierung des Vorformlings ermöglicht es, beispielsweise entlang eines Transportweges des Vorformlinges übliche Heizstrahler nach dem Stand der Technik mit IR-Strahlern anzuordnen und unterschiedliche Bereich des Vorformlings unterschiedlich lange der Strahlung auszusetzen. Es sind hierbei insbesondere keine aufwendigen Koordinationen zwischen der Geschwindigkeit einer Längsbewegung des Vorformlings in Transportrichtung und der Umdrehungsgeschwindigkeit erforderlich.

Ein einfaches Antriebsverfahren kann ebenfalls dadurch unterstützt werden, daß bei der schrittweisen Rotation eine gleiche Drehrichtung vorgegeben wird.

Zur Vermeidung von Unsymmetrien bei der Beheizung ist auch möglich, daß wechselnde Drehrichtungen vorgeben werden.

Ein sehr symmetrisches Temperaturprofil in Umfangsrichtung kann dadurch bereitgestellt werden, daß die Änderung der Drehrichtung jeweils bei Erreichen einer vollständigen Drehung von 360° durchgeführt wird.

In Abhängigkeit von den jeweiligen Anwendungsanforderungen ist es auch möglich, daß eine Änderung der Drehrichtung jeweils bei Erreichen eines ganzzahligen Vielfachen einer vollständigen Drehung von 360° durchgeführt wird.

Bei Behältern mit bezüglich einer Behältermittellinie symmetrisch angeordnetem Mündungsabschnitt ist es vorteilhaft, daß ein symmetrisches Temperaturprofil in Umfangsrichtung erzeugt wird.

Bei unsymmetrisch angeordnetem Mündungsabschnitt kann es vorteilhaft sein, daß ein unsymmetrisches Temperaturprofil in Umfangsrichtung erzeugt wird.

Eine gleichmäßige Materialverteilung bei der Blasverformung des Behälters wird dadurch unterstützt, daß ein Reckverhältnis im Bereich von 1:1,5 bis 1:2,2 eingestellt wird. Bevorzugt ist eine obere Intervallgrenze von 2,0.

Eine Anpassung des Reckverhältnisses an die Gestaltung des Behälters kann dadurch erfolgen, daß bei zunehmender Unrundheit des herzustellenden Behälters das Reckverhältnis gegen 1:1,5 strebt.

Ein weiterer positiver Einfluß auf die Materialverteilung kann dadurch genommen werden, daß der Reckvorgang mit Druckluftunterstützung durchgeführt wird.

Ebenfalls ist es für die Materialverteilung vorteilhaft, daß die Druckluftzuführung derart erfolgt, daß während des Reckens eine Anlage des Vorformlings an der Blasform verhindert wird beziehungsweise eine Anlage des expandierenden Vorformlings ausschließlich im Bereich der Innenwandung einer Blasform erfolgt, der sich in der Umgebung eines bezüglich eines unrunden Behälterquerschnittes minimalen Formdurchmessers erstreckt.

Eine optimale Koordinierung von Reckgeschwindigkeit und Druckluftzuführung erfolgt derart, daß die Druckluftzuführung während der Durchführung des Reckvorganges derart gewählt wird, daß in einer Längsrichtung eine Anlage des expandierenden Vorformlings an der Blasform ausschließlich in einem in Längsrichtung mittleren Bereich der Blasform erfolgt.

Ein besonders einfacher Aufbau wird dadurch bereitgestellt, daß die Vorformlinge zunächst gleichmäßig temperiert und anschließend zur partiellen Abkühlung von einer Kühldüse angeblasen werden.

In der Zeichnung sind Ausführungsbeispiele der Erfindung schematisch dargestellt. Es zeigen:
- Fig. 1: einen Längsschnitt durch einen Vorformling,
- Fig. 2: einen Längsschnitt durch einen flaschenförmigen Behälter,
- Fig. 3: eine Draufsicht auf einen Behälter mit ovalem Querschnitt,
- Fig. 4: eine Draufsicht auf einen Behälter mit ovalem Querschnitt und unsymmetrisch angeordneter Mündung,
- Fig. 5: einen Querschnitt durch eine Anordnung eines Vorformlings im Bereich eines Heizstrahlers,
- Fig. 6: ein Zeitdiagramm zur Veranschaulichung einer Taktung einer Rotationsbewegung des Vorformlings,
- Fig. 7: einen Querschnitt durch eine Blasform, in der ein Behälter mit ovalem Querschnitt geblasen wird,
- Fig. 8: ein Längsschnitt durch die Blasform gemäß Fig. 7,
- Fig. 9: eine Prinzipdarstellung zur Veranschaulichung einer selektiven Kühlung eines Vorformlings,
- Fig. 10: eine Skizze zur Veranschaulichung einer Temperaturkonditionierung eines Vorformlings durch unterschiedliche Ansteuerung von Heizeinrichtungen
**und**
- Fig. 11: ein Diagramm zur Veranschaulichung der Abhängigkeit eines Reckverhältnisses von einem Seitenverhältnis der unrunden Flasche.

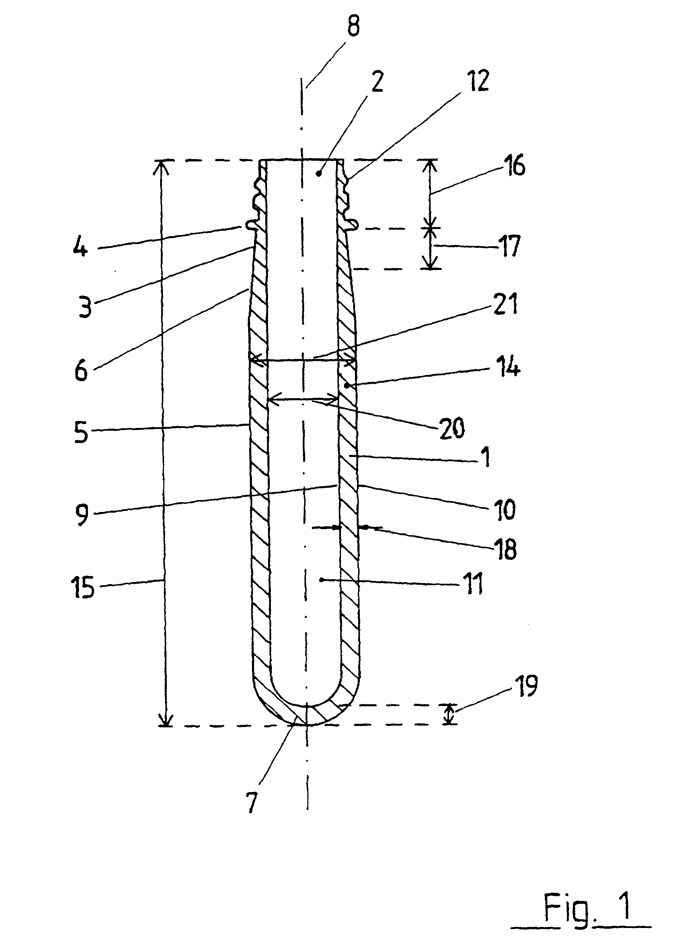

Ein Vorformling (1) besteht entsprechend der Ausführungsform in Fig. 1 aus einem Mündungsabschnitt (2), einem den Mündungsabschnitt (2) von einem Halsbereich (3) trennenden Stützring (4), einem den Halsbereich (3) in einen Wandungsabschnitt (5) überleitenden Schulterbereich (6) sowie einem Boden (7). Der Stützring (4) überkragt den Mündungsabschnitt (2) quer zu einer Längsachse (8). In der Region des Schulterbereiches (6) erweitert sich der Außendurchmesser des Vorformlings (1) ausgehend vom Halsbereich (3) in Richtung auf den Wandungsabschnitt (5). Bei einem aus dem Vorformling (1) herzustellenden Behälter (13) bildet der Wandungsabschnitt (5) im wesentlichen die Seitenwandung des Behälters aus. Der Boden (7) ist gerundet ausgebildet.

Der Mündungsabschnitt (2) kann beispielsweise mit einem Außengewinde (12) versehen sein, das es ermöglicht, beim fertigen Behälter (13) einen Schraubverschluß aufzusetzen. Es ist aber ebenfalls möglich, den Mündungsabschnitt (2) mit einer Außenwulst zu versehen, um eine Angriffsfläche für einen Kronkorken zu schaffen. Darüber hinaus sind auch eine Vielzahl weiterer Gestaltungen denkbar, um ein Aufsetzen von Steckverschlüssen zu ermöglichen.

Aus der Darstellung in Fig. 1 ist ersichtlich, daß der Wandungsabschnitt (5) eine Innenfläche (9) sowie eine Außenfläche (10) aufweist. Die Innenfläche (9) begrenzt einen Vorformlingsinnenraum (11).

Im Schulterbereich (6) kann sich die Dicke einer Vorformlingswandung (14) ausgehend vom Halsbereich (3) in Richtung auf den Wandungsbereich (5) mit zunehmender Wandstärke erstrecken. In Richtung der Längsachse (8) weist der Vorformling (1) eine Vorformlingslänge (15) auf. In Richtung der Längsachse (8) erstrecken sich der Mündungsbereich (2) und der Stützring (4) mit einer gemeinsamen Mündungslänge (16). Der Halsbereich (3) weist im Bereich der Längsachse (8) eine Halslänge (17) auf. Im Halsbereich (3) erstreckt sich der Vorformling (3) vorzugsweise mit konstanter Wanddicke.

Im Wandungsbereich (5) weist der Vorformling (1) eine Wanddicke (18) auf und im Bereich des Bodens (7) ist eine Bodendicke (19) anzutreffen. Eine weitere Dimensionierung des Vorformlings (1) erfolgt mit Hilfe eines Innendurchmessers (20) und eines Außendurchmessers (21), die im annähernd zylindrisch verlaufenden Wandungsbereich (5) gemessen werden.

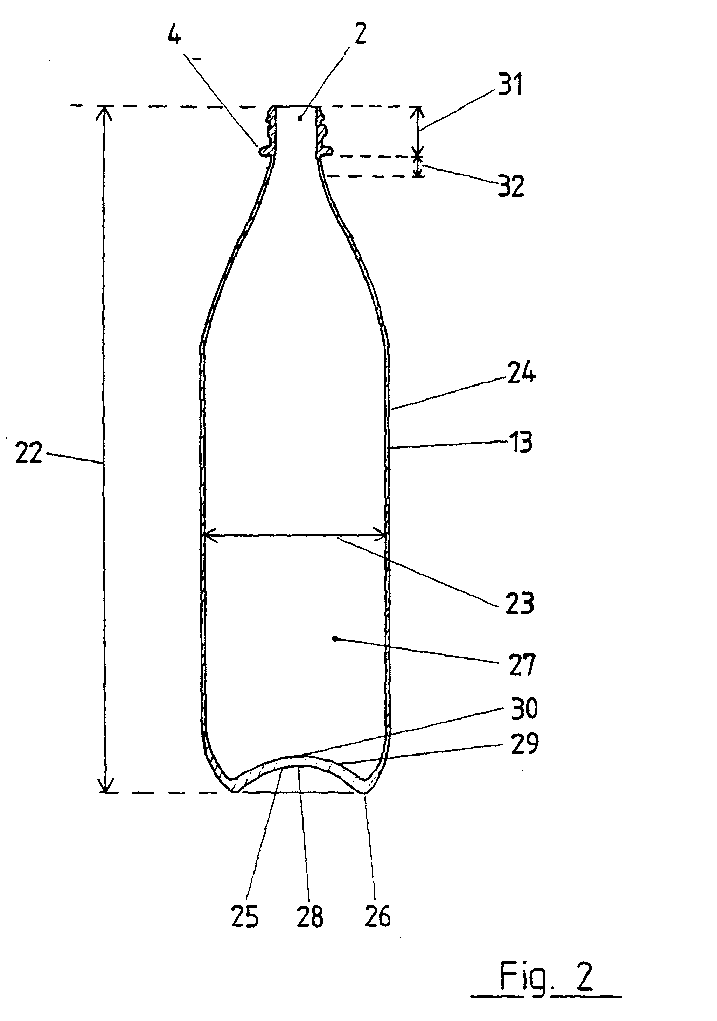

Bei dem in Fig. 2 dargestellten flaschenförmigen Behälter (13) sind im wesentlichen unverändert der Mündungsabschnitt (2) und der Stützring (4) anzutreffen. Der weitere Bereich des Behälters (13) ist durch die durchgeführte biaxiale Orientierung sowohl in Querrichtung als auch in Längsrichtung relativ zum Vorformling (1) expandiert. Der Behälter (13) weist hierdurch eine Behälterlänge (22) und einen Behälterdurchmesser (23) auf, der in Anbetracht der zu berücksichtigenden Genauigkeiten im Folgenden nicht bezüglich des konkreten Innendurchmessers beziehungsweise Außendurchmessers unterschieden werden soll.

Fig. 2 zeigt unter anderem den Bodenbereich des blasgeformten Behälters (13). Der Behälter (13) weist eine Seitenwandung (24) und einen Behälterboden (25) auf. Der Behälterboden (25) besteht aus einem Standring (26) und einem in Richtung auf einen Behälterinnenraum (27) nach innen gewölbtem Dom (28). Der Dom (28) ist aus einer Domschräge (29) und einem Zentrum (30) ausgebildet.

Der Behälter (13) weist eine Behältermündungslänge (31) und eine Behälterhalslänge (32) auf, wobei zumindest die Behältermündungslänge (31) in der Regel gleich der Mündungslänge (16) des Vorformlings (1) ist.

Eine Beheizung des Vorformlings (1) vor dem Orientierungsvorgang ist in unterschiedlichen Variationen denkbar. Bei einer Verwendung einer tunnelartigen Heizstrecke erfolgt die Temperierung lediglich in Abhängigkeit von der Verweildauer. Es ist jedoch ebenfalls denkbar, Heizstrahler zu verwenden, die den Vorformling (1) mit Infrarot- oder Hochfrequenzstrahlung beaufschlagen. Mit Hilfe derartiger Strahler ist es möglich, ein Temperaturprofil im Bereich des Vorformlings (1) in Richtung der Längsachse (8) bzw. in Umfangsrichtung zu erzeugen.

Wird ein derartiger Heizstrahler aus mehreren unabhängig voneinander ansteuerbaren Heizelementen ausgebildet, die in Richtung der Längsachse (8) übereinander angeordnet sind, so kann durch eine intensivere Ansteuerung der Heizelemente im Bereich der in Richtung auf den Mündungsabschnitt (2) oberen Ausdehnung des Vorformlings (1) im verdickten Bereich des Wandungsabschnittes (5) eine höhere Wärmeenergie eingestrahlt werden, als in dem Bereich des Wandungsabschnittes (5), der dem Boden (7) zugewandt ist. Bei lediglich gleichmäßig ansteuerbaren Heizstrahlern kann eine derartige Wärmeprofilierung auch durch eine Anordnung der Heizelemente mit in Richtung der Längsachse (8) unterschiedlichen Abständen realisiert werden.

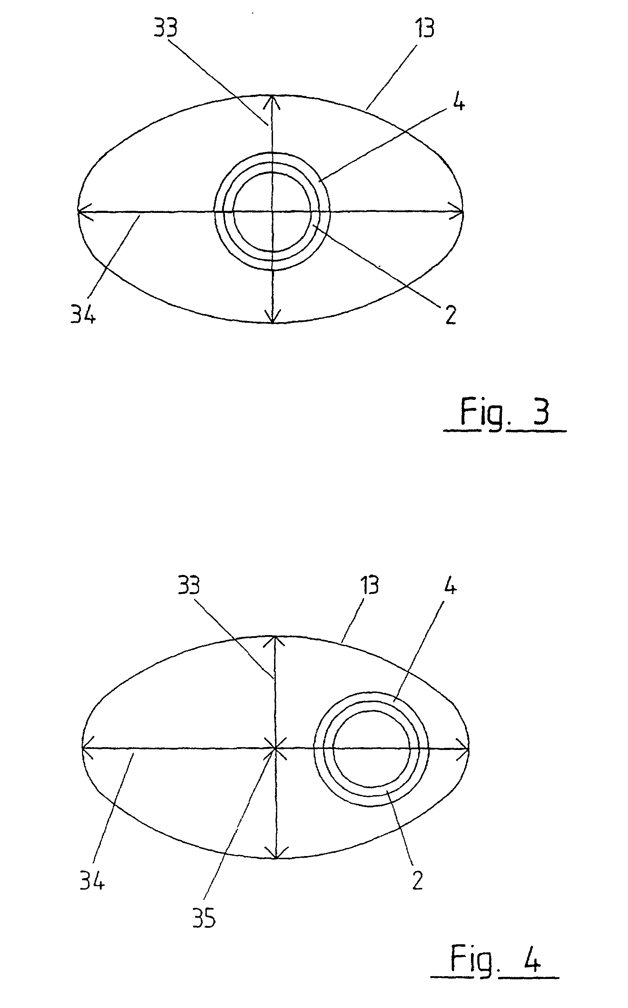

Fig. 3 zeigt einen Querschnitt durch einen Behälter (13) mit unrunder Querschnittfläche in Form eines Ovales. Es liegt hier somit kein konstanter Behälterdurchmesser (23) vor, sondern der Behälterdurchmesser (23) liegt je nach Meßrichtung zwischen einem minimalen Behälterdurchmesser (33) und einem maximalen Behälterdurchmesser (34). Bei der Ausführungsform gemäß Fig. 3 ist der Mündungsabschnitt (2) des Behälters (13) im wesentlichen zentrisch angeordnet.

Bei der Ausführungsform gemäß Fig. 4 weist der Behälter (13) eine ähnliche Gestaltung wie der Behälter (13) gemäß Fig. 3 auf. Der Mündungsabschnitt (2) ist allerdings bezüglich einer Behältermittellinie (35) versetzt angeordnet.

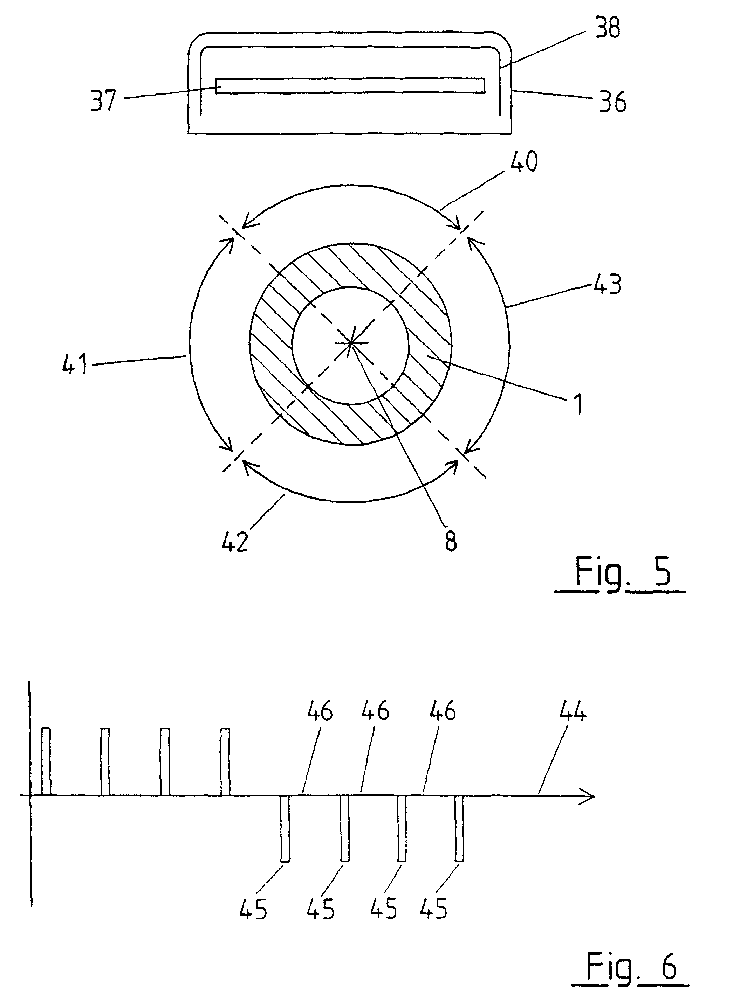

Fig. 5 zeigt einen Horizontalschnitt durch einen im Bereich einer Heizeinrichtung (36) angeordneten Vorformling (1). Es ist erkennbar, daß die Heizeinrichtung (36) Heizstrahler (37) sowie einen Reflektor (38) aufweist. Ein Umfang (39) des Vorformlings (1) ist bei dieser Ausführungsform in vier Winkelbereiche (40,41,42,43) unterteilt. In Richtung des Umfanges (39) soll die Temperierung der Winkelbereiche (40) unterschiedlich erfolgen. Zur Herstellung eines Behälters (13) mit einer Kontur entsprechend Fig. 3 ist es beispielsweise zweckmäßig, jeweils die Winkelbereiche (40,42) sowie die Winkelbereiche (41,43) zumindest annähernd gleich zu temperieren. Insbesondere ist vorgesehen, die Winkelbereiche (40,42) mit einer höheren Temperatur als die Winkelbereiche (41,43) zu versehen, wenn ein ovaler Behälter (13) hergestellt werden soll. Die Größe der jeweiligen Winkelbereiche (40,41,42,43) hängt von der Gestaltung des Behälters (13) ab.

Zur Realisierung des Temperaturprofils in Richtung des Umfanges (39) ist es beispielsweise möglich, eine Rotation des Vorformlings (1) um die Längsachse (8) mit einer schrittweisen Bewegung durchzuführen, wie sie in Fig. 6 entlang einer Zeitachse (44) veranschaulicht ist. Es folgen dabei jeweils kurze Bewegungsabschnitte (45) und Ruheabschnitte (46) aufeinander. Bei einer Temperaturprofilierung in Umfangsrichtung mit vier Winkelbereichen (40,41,42,43) kann die Bewegung derart erfolgen, daß zunächst innerhalb eines vorgebbaren Ruheabschnittes (46) der Winkelbereich (40) der Heizeinrichtung (36) zugewandt ist und daß nach dem Ende des Ruheabschnittes (46) innerhalb des Bewegungsabschnittes (45) der Winkelbereich (41) relativ schnell an einer Heizeinrichtung (36) vorbeigeführt wird. Zum Ende des Bewegungsabschnittes (45) ist dann der Winkelbereich (42) der Heizeinrichtung (36) zugewandt. Der Vorformling (1) wird somit um etwa 180° gedreht.

Beispielsweise ist es möglich, den Vorformling (1) zunächst vorab gleichmäßig zu temperieren und anschließend mit Hilfe der beschriebenen Bewegung das Temperaturprofil zu erzeugen. Ebenfalls ist es möglich, einen Bewegungsablauf des Vorformlinges (1) bei der Rotation derart vorzusehen, daß ausgehend von einem kalten Vorformling (1) durch die jeweiligen Bewegungsphasen das Temperaturprofil erreicht wird. Zumindest bei einer sich an eine Vortemperierung anschließenden Temperaturprofilierung sind die Bewegungsabschnitte (45) zeitlich wesentlich kürzer als die Ruheabschnitte (46). Das Verhältnis der Zeitdauern kann beispielsweise 1:10 sein.

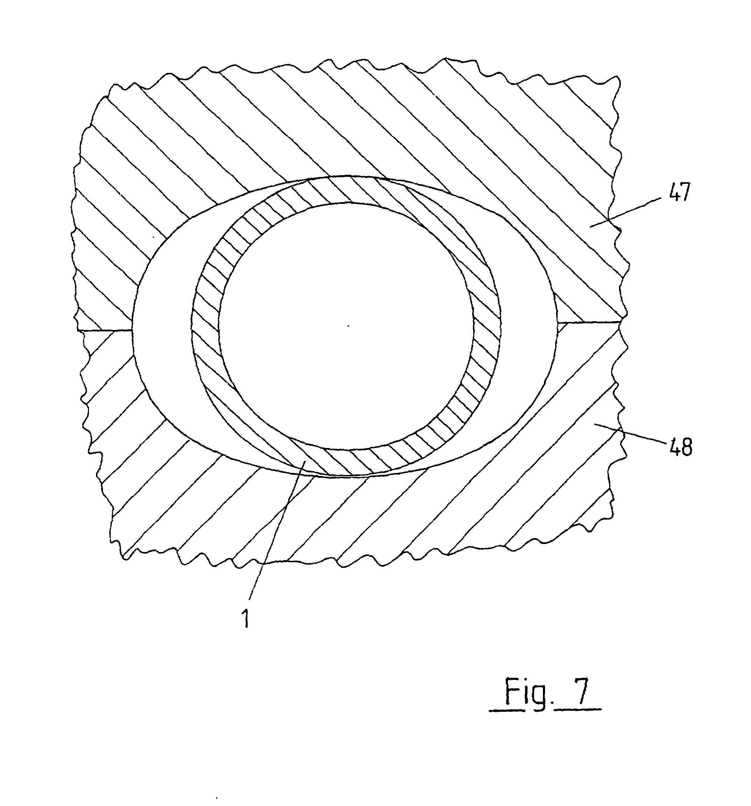

Fig. 7 zeigt die Anordnung eines bereits teilweise expandierten Vorformlings (1) in einer Blasform, die aus Formhälften (47,48) besteht. Der Vorformling (1) ist im eingezeichneten Expansionszustand bereits an den mit relativ zueinander geringerem Abstand angeordneten Formwandungen zur Anlage gekommen.

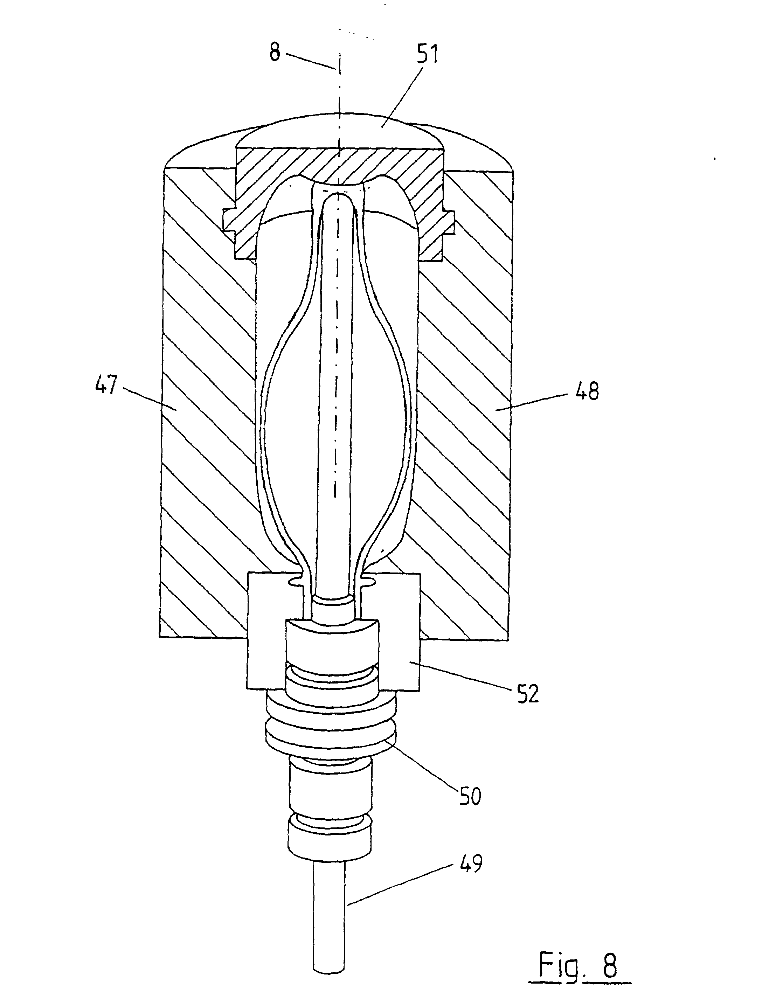

Fig. 8 zeigt die Anordnung des bereits teilweise expandierten Vorformlings (1) in den Formhälften (47,48) in einem Vertikalschnitt. Es ist erkennbar, daß der Vorformling (1) von einer Reckstange (49) gereckt wurde, die durch einen Anschlußkolben (50) hindurchgeführt ist. Es sind ein Bodeneinsatz (51) und ein Gewindeeinsatz (52) in die Formhälften (47,48) eingefügt. Durch die Kombination der Reckung, der Temperierung des Vorformlings (1) und der Expansion wird gewährleistet, daß der expandierende Vorformling (1) in Richtung der Längsachse (8) zunächst in einem mittleren Bereich der Formhälften (47,48) zur Anlage kommt.

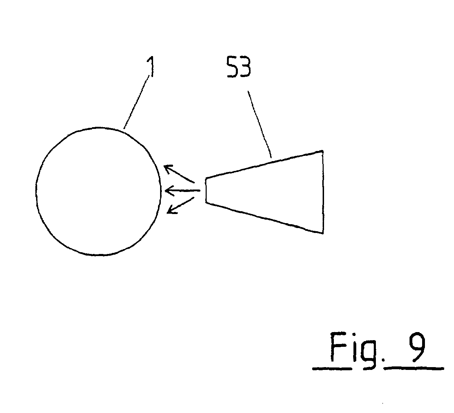

Fig. 9 zeigt eine weitere Möglichkeit zur Aufbringung eines Temperaturprofils. Ein vortemperierter Vorformling (1) wird hierbei im Schrittbetrieb vor einer Kühldüse (53) bewegt, der ein kühlendes Gas entströmt. Es kann beispielsweise Luft verwendet werden.

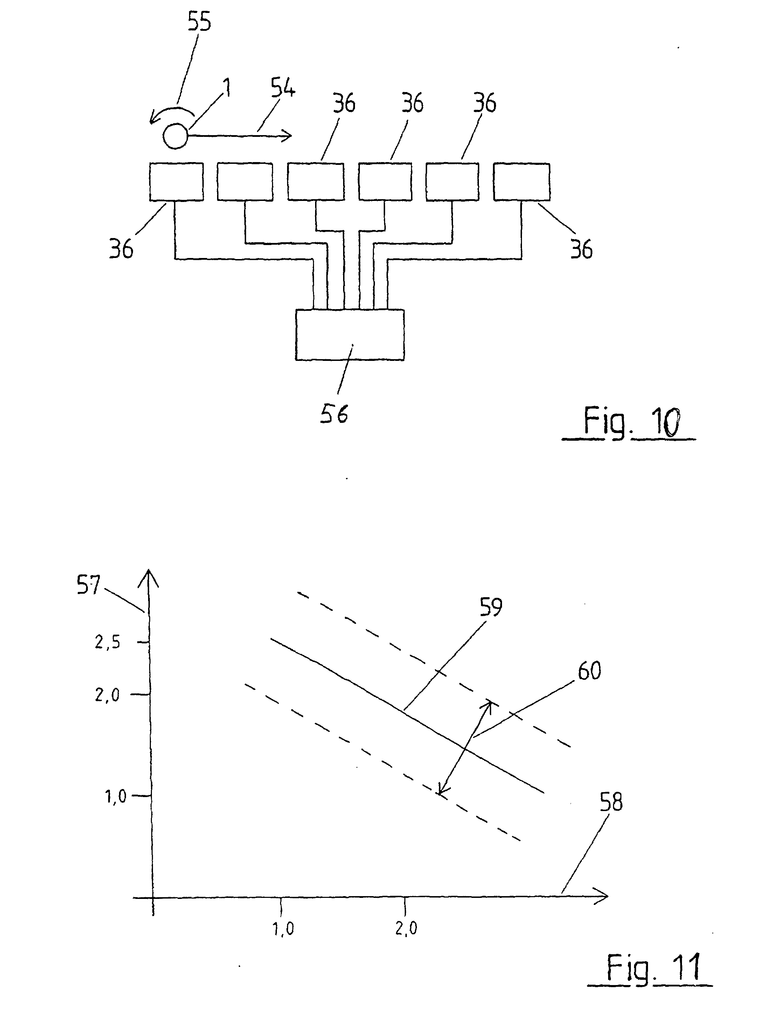

Fig. 10 zeigt eine weitere Variante. Die Vorformlinge (1) werden hier sowohl in Transportrichtung (54) als auch in Rotationsrichtung (55) bewegt. Die Heizeinrichtungen (36) sind an eine Heizsteuerung (56) angeschlossen, die die in Transportrichtung (54) hintereinanderliegenden Heizeinrichtungen (36) derart ansteuert, daß auf den vorbeibewegten Vorformlingen (1) das gewünschte Temperaturprofil in Umfangsrichtung erzeugt wird. Bei dieser Ausführungsform ist es zweckmäßig, in Transportrichtung (54) relativ gering dimensionierte Heizeinrichtungen (36) zu verwenden, um eine präzise Temperaturvorgabe zu unterstützen.

Fig. 11 veranschaulicht in einem Diagramm, daß eine Reckfaktor-Achse (57) und eine Seitenverhältnis-Achse (58) aufweist, den Verlauf eines Reckverhältnisses (59) in Abhängigkeit vom Verhältnis des minimalen Behälterdurchmessers (33) und des maximalen Behälterdurchmessers (34). Auf der Seitenverhältnis-Achse (58) ist der Quotient der Durchmesser (33,34) aufgetragen. Gestrichelt ist in Fig. 11 eine Variationsbreite (60) für den Verlauf des Reckverhältnisses (59) eingetragen. Grundsätzlich gilt, daß mit zunehmendem Quotienten aus maximalen Behälterdurchmesser (34) und minimalen Behälterdurchmesser (33) das Reckverhältnis von gereckter Länge des Vorformlings (1) zu ungereckte Länge abnimmt.

Bei einer späteren Handhabung der geblasenen unrunden Behälter (13) kann es von Vorteil sein, wenn die Behälter (13) detektierbare Markierungen beziehungsweise mechanisch erfaßbare Strukturen aufweisen. Bei einer optischen Erfassung der Rotationsorientierung ist beispielsweise daran gedacht, im Bereich des Mündungsabschnittes (2), im Bereich des Stützringes (4) oder unterhalb des Mündungsabschnittes (2) Markierungen aufzubringen, die sich im Hinblick auf ihre Transparenz relativ zum Umgebungsmaterial unterscheiden. Gedacht ist hier beispielsweise an Oberflächenstrukturierungen mit geringer Rauhtiefe oder an die Verwendung von Materialtrübungen, die beispielsweise als Kristallisationsbereiche ausgebildet sein können, die durch Wärmeeinwirkung erzeugt wurden. Im Bereich des nichtorientierten amorphen Materials führen derartige Kristallisationseffekte zu einem milchigen Aussehen des Materials.

Gleichfalls ist es möglich, in den oben beschriebenen Bereichen Vorsprünge oder Vertiefungen anzuordnen, die mechanisch detektierbar sind. Bei einer mechanisch relativ einfach zu realisierenden Rotation wird der Behälter (13) hierbei mit seiner Markierung gegen einen Anschlag geführt.

Die vorstehend erläuterten Markierungen können bei der Behälterherstellung sowie der Temperierung der Vorformlinge (1) auch dazu benutzt werden, jeweils vorgegebene Positionen einzunehmen, so daß während des gesamten Herstellungsvorganges sowie bei den späteren Handhabungen exakt bekannte Rotationsorientierungen der Vorformlinge (1), möglicher Zwischenprodukte sowie der geblasenen Behälter (13) vorliegen.

Die beschriebenen Maßnahmen zur Erzeugung eines Temperaturprofils im Bereich des Vorformlings (1) sowohl in Richtung seiner Längsachse (8) als auch in Umfangsrichtung lassen sich beliebig miteinander kombinieren, so daß eine Anpassung an die jeweils konkret vorliegenden Vorformlingsgeometrien erfolgen kann.

Grundsätzlich können beliebige thermoplastische Kunststoffe gemäß dem beschriebenen Verfahren und mit Hilfe der beschriebenen Vorrichtung verarbeitet werden. Insbesondere ist es beispielsweise möglich, Vorformlinge aus Polypropylen oder aus Polyethylenterephthalat zu verarbeiten.

Im Hinblick auf die diversen beschriebenen Möglichkeiten zur Temperierung des Vorformlings (1), bei denen der Vorformling (1) zunächst im zu temperierenden Bereich im wesentlichen gleichmäßig temperiert und anschließend mit einer überlagerten Temperaturprofilierung versehen wird, ist ergänzend zu vermerken, daß auch dieses Temperierungsverfahren sowohl in Umfangsrichtung des Vorformlings (1) als auch in Längsrichtung des Vorformlings (1) oder kombiniert in beiden räumlichen Orientierungen angewendet werden kann. Die Wärmeprofilierung in Längsrichtung wird darüber insbesondere so gewählt, daß eine hohe und gleichmäßige Orientierung des Materials erreicht wird, um sowohl eine gute Widerstandsfähigkeit des geblasenen Behälters (13) als auch einen geringen Materialeinsatz gewährleisten zu können.

## Patentansprüche

1. Verfahren zur Temperierung von Vorformlingen (1) aus einem thermoplastischen Material, wobei die Vorformlinge (1) zur Blasformung in Behälter (13) vorgesehen sind und bei dem der Vorformling (1) entlang eines Umfanges mit einem Temperaturprofil versehen wird, das dadurch erzeugt wird, daß sich in Richtung einer Längsachse (8) des Vorformlings (1) im Bereich einer Vorformlingswandung (5) erstreckende streifenförmige Bereiche unterschiedlich beheizt werden und bei dem eine schrittweise Temperierung zur zeitlich aufeinanderfolgenden thermischen Konditionierung unterschiedlicher Bereiche des Vorformlings (1) durchgeführt wird, dadurch gekennzeichnet, daß eine schrittweise Rotation mit Bewegungs- und Ruhephasen durchgeführt wird.

2. Verfahren nach Anspruch 1, dadurch gekennzeichnet, daß bei der schrittweisen Rotation eine gleiche Drehrichtung vorgegeben wird.

3. Verfahren nach Anspruch 1 oder 2, dadurch gekennzeichnet, daß wechselnde Drehrichtungen vorgeben werden.

4. Verfahren nach Anspruch 3, dadurch gekennzeichnet, daß die Änderung der Drehrichtung jeweils bei Erreichen einer vollständigen Drehung von 360° durchgeführt wird.

5. Verfahren nach Anspruch 3, dadurch gekennzeichnet, daß eine Änderung der Drehrichtung jeweils bei Erreichen eines ganzzahligen Vielfachen einer vollständigen Drehung von 360° durchgeführt wird.

6. Verfahren nach einem der Ansprüche 1 bis 5, dadurch gekennzeichnet, daß ein relativ zu einer in Längsrichtung verlaufenden Mantellinie des Vorformlings (1) symmetrisches Temperaturprofil in Umfangsrichtung des Vorformlings (1) erzeugt wird.

7. Verfahren nach einem der Ansprüche 1 bis 5, dadurch gekennzeichnet, daß ein relativ zu einer in Längsrichtung verlaufenden Mantellinie des Vorformlings (1) unsymmetrisches Temperaturprofil in Umfangsrichtung des Vorformlings (1) erzeugt wird.

8. Verfahren nach einem der Ansprüche 1 bis 7, dadurch gekennzeichnet, daß ein Reckverhältnis im Bereich von 1:1,5 bis 1:2,2 eingestellt wird.

9. Verfahren nach einem der Ansprüche 1 bis 8, dadurch gekennzeichnet, daß bei zunehmender Abweichung einer Querschnittfläche des herzustellenden Behälters (13) von einer Kreiskontur das Reckverhältnis gegen 1:1,5 strebt.

10. Verfahren nach einem der Ansprüche 1 bis 9, dadurch gekennzeichnet, daß der Reckvorgang mit Druckluftunterstützung durchgeführt wird.

11. Verfahren nach einem der Ansprüche 1 bis 10, dadurch gekennzeichnet, daß die Druckluftzuführung derart erfolgt, daß während des Reckens eine Anlage des expandierenden Vorformlings (1) ausschließlich im Bereich der Innenwandung einer Blasform erfolgt, der sich in der Umgebung eines minimalen Formdurchmessers erstreckt.

12. Verfahren nach einem der Ansprüche 1 bis 11, dadurch gekennzeichnet, daß die Druckluftzuführung während der Durchführung des Reckvorganges derart gewählt wird, daß in einer Längsrichtung eine Anlage des expandierenden Vorformlings (1) an der Blasform ausschließlich in einem in Längsrichtung mittleren Bereich der Blasform erfolgt.

13. Verfahren nach einem der Ansprüche 1 bis 12, dadurch gekennzeichnet, daß die Vorformlinge (1) zunächst gleichmäßig temperiert und anschließend zur partiellen Abkühlung von einer Kühldüse (53) angeblasen werden.

14. Vorrichtung zur Temperierung von Vorformlingen (1) aus einem thermoplastischen Material, die mindestens eine Förderstrecke für die Vorformlinge (1) und mindestens eine Heizeinrichtung aufweist und die die Vorformlinge (1) mit einem Temperaturprofil in Umfangsrichtung der Vorformlinge (1) versieht, dadurch gekennzeichnet, daß zur Durchführung einer Rotationsbewegung des Vorformlings (1) ein Rotationsantrieb vorgesehen ist, der mit einer schrittartigen Betriebsweise versehen ist.

15. Vorrichtung nach Anspruch 14, dadurch gekennzeichnet, daß eine Drehrichtungssteuerung für alternierende Drehrichtungen vorgesehen ist.

16. Vorrichtung nach Anspruch 14 oder 15, dadurch gekennzeichnet, daß eine Bewegungssteuerung mit einer vorgebbaren Schrittanzahl von abwechselnden Bewegungsphasen und Ruhephasen je Drehrichtung vorgesehen ist.

## Claims

1. A method for tempering preforms (1) made of a thermoplastic material, the preforms (1) being provided for blow moulding into containers (13) and the preform (1) being provided along a circumference with a temperature profile, which is generated by heating strip-shaped areas extending in the direction of a longitudinal axis (8) of the preform (1) in the region of a preform wall (5) to different degrees, and a step-by-step tempering being carried out for the successive thermal conditioning in time of different areas of the preform (1), characterised in that a step-by-step rotation with movement and rest phases is carried out.

2. A method according to claim 1, characterised in that the same direction of rotation is prescribed for the step-by-step rotation.

3. A method according to claim 1 or 2, characterised in that alternate directions of rotation are prescribed.

4. A method according to claim 3, characterised in that the change in the direction of rotation is effected each time a complete rotation of 360° is reached.

5. A method according to claim 3, characterised in that a change in the direction of rotation is effected each time an integral multiple of a complete rotation of 360° is reached.

6. A method according to one of claims 1 to 5, characterised in that a temperature profile is generated in the circumferential direction of the preform (1) which is symmetrical to a generatrix of the preform (1) extending in the longitudinal direction.

7. A method according to one of claims 1 to 5, characterised in that a temperature profile is generated in the circumferential direction of the preform (1) which is asymmetrical to a generatrix of the preform (1) extending in the longitudinal direction.

8. A method according to one of claims 1 to 7, characterised in that a stretch ratio in the region of 1:1.5 to 1:2.2 is set.

9. A method according to one of claims 1 to 8, characterised in that the stretch ratio tends towards 1:1.5 with an increasing deviation of a cross sectional area of the container (13) which is to be manufactured from a circular contour.

10. A method according to one of claims 1 to 9, characterised in that the stretching process is carried out with the assistance of compressed air.

11. A method according to one of claims 1 to 10, characterised in that the compressed air supply is effected in such a manner that, during the stretching, an abutment of the expanding preform (1) occurs exclusively in the region of the inner wall of a blow mould extending in the region of a minimum mould diameter.

12. A method according to one of claims 1 to 11, characterised in that the compressed air supply during the stretching process is selected in such a manner that, in a longitudinal direction, an abutment of the expanding preform (1) against the blow mould occurs exclusively in a central region of the blow mould in the longitudinal direction.

13. A method according to one of claims 1 to 12, characterised in that the preforms (1) are initially uniformly tempered and are subsequently blown by a cooling nozzle (53) for partial cooling.

14. A device for tempering preforms (1) made of a thermoplastic material, which comprises at least one conveying track for the preforms (1) and at least one heating device and provides the preforms (1) with a temperature profile in the circumferential direction of the preforms (1), characterised in that a rotation drive, which is provided with a step-by-step operating mode, is provided for effecting a rotary movement of the preform (1).

15. A device according to claim 14, characterised in that a direction of rotation control is provided for alternating directions of rotation.

16. A device according to claim 14 or 15, characterised in that a movement control with a predeterminable number of steps of alternating movement phases and rest phases for each direction of rotation is provided.

## Revendications

1. Procédé de thermorégulation d'une ébauche (1) constituée d'un matériau thermoplastique, où les ébauches (1) sont prévues pour des récipients (13) par moulage par soufflage et au cours duquel l'ébauche (1) présente un profil de température le long d'une circonférence, qui est caractérisé en ce que dans la direction d'un axe longitudinal (8) de l'ébauche (1), aux environs d'une paroi (5) de l'ébauche, des domaines en forme de bande sont différemment chauffés et au cours duquel une thermorégulation par étape est réalisée pour un conditionnement thermique successif des différents domaines de l'ébauche (1), caractérisé en ce qu'une rotation par étape est réalisée avec des phases de mouvement et de repos.

2. Procédé suivant la revendication 1, caractérisé en ce que lors de la rotation par étape, un sens identique de rotation est établi.

3. Procédé suivant la revendication 1 ou 2, caractérisé en ce que l'on établit des sens variables de direction.

4. Procédé suivant la revendication 3, caractérisé en ce que la modification du sens de rotation est réalisée chaque fois que l'on atteint une rotation complète de 360°.

5. Procédé suivant la revendication 3, caractérisé en ce que la modification du sens de rotation est réalisée chaque fois que l'on atteint un multiple entier d'une rotation complète de 360°.

6. Procédé suivant l'une quelconque des revendications 1 à 5, caractérisé en ce que l'on produit un profil de température symétrique par rapport à une génératrice se propageant dans la direction longitudinale de l'ébauche (1), dans le sens de la circonférence de l'ébauche (1).

7. Procédé suivant l'une quelconque des revendications 1 à 5, caractérisé en ce que l'on produit un profil de température non symétrique par rapport à une génératrice se propageant dans la direction longitudinale de l'ébauche (1), dans le sens de la circonférence de l'ébauche (1).

8. Procédé suivant l'une quelconque des revendications 1 à 7, caractérisé en ce que l'on met en oeuvre un rapport d'étirage situé dans l'intervalle allant de 1:1,5 à 1:2,2.

9. Procédé suivant l'une quelconque des revendications 1 à 8, caractérisé en ce que lors d'une déviation croissante d'une surface transversale du récipient (13) à préparer, depuis un contour circulaire, le rapport d'étirage tend vers 1:1,5.

10. Procédé suivant l'une quelconque des revendications 1 à 9, caractérisé en ce que le processus d'étirage est réalisé avec un apport d'air comprimé.

11. Procédé suivant l'une quelconque des revendications 1 à 10, caractérisé en ce que l'apport d'air comprimé est réalisé en ce que pendant l'étirage, un aménagement de l'ébauche (1) en expansion a lieu exclusivement dans le domaine de la paroi interne d'un moule de soufflage, qui s'étend au voisinage d'un diamètre minimal du moule.

12. Procédé suivant l'une quelconque des revendications 1 à 11, caractérisé en ce que l'apport d'air comprimé est choisi pendant la réalisation du processus d'étirage en ce que dans une direction longitudinale, un aménagement de l'ébauche (1) en expansion se fait exclusivement sur le moule de soufflage, dans un domaine moyen en direction longitudinale du moule de soufflage.

13. Procédé suivant l'une quelconque des revendications 1 à 12, caractérisé en ce que l'ébauche (1) est tempérée d'abord uniformément et ensuite, est soufflée par refroidissement partiel depuis une buse de refroidissement (53).

14. Dispositif de thermorégulation d'ébauches (1) constituées d'un matériau thermoplastique, qui présente au moins une voie de desserte pour les ébauches (1) et au moins une installation de chauffage et qui procure à l'ébauche (1), un profil de température dans le sens de la circonférence de l'ébauche (1), caractérisé en ce que pour réaliser un mouvement de rotation de l'ébauche (1), on prévoit un dispositif de rotation qui est muni d'un mode de fonctionnement par étape.

15. Dispositif suivant la revendication 14, caractérisé en ce que l'on prévoit un réglage du sens de rotation pour des sens de rotation alternés.

16. Dispositif suivant la revendication 14 ou 15, caractérisé en ce que l'on prévoit un réglage du mouvement avec un nombre d'étapes des phases de mouvement et des phases de repos pouvant être varié pour chaque sens de rotation.
